# FASCICULE DE BREVET EUROPEEN

(11) **EP 1 470 711 B1**
(45) Date de publication et mention de la délivrance du brevet: **10.05.2006**
(21) Numéro de dépôt: 02806654.6
(22) Date de dépôt: 16.12.2002
(51) Int. Cl.: H04N 7/14, H04N 7/15

(54) **SYSTEME DE VISIOCONFERENCE POUR TELE-TRAVAIL**
VIDEOKONFERENZSYSTEM FÜR DAS ARBEITEN AUS DER FERNE
VIDEOCONFERENCING SYSTEM FOR TELE-WORKING

(30) Priorité: 30.01.2002 FR 0201119
(43) Date de publication de la demande: 27.10.2004
(73) Titulaire: FRANCE TELECOM, 75015 Paris (FR)
(72) Inventeur: BERENGUER, Marc, F-38420 Revel (FR)
(74) Mandataire: Cabinet Martinet & Lapoux
(86) Numéro de dépôt international: PCT/FR2002/004365
(87) Numéro de publication internationale: WO 2003/065721

(56) Documents cités:
- WO-A-95/10157
- WO-A-97/49244

## Description

La présente invention concerne un système de visioconférence avec des terminaux de visiophonie et un moyen central multipoint de gestion de visioconférence reliés à travers un réseau de télécommunications. Elle concerne plus particulièrement une visioconférence entre des participants dont certains sont des télé-travailleurs devant des terminaux respectifs installés à leurs domiciles.

Dans des systèmes de visioconférence connus, les images des participants à une visioconférence devant des terminaux respectifs sont parfois retransmises vers chaque terminal sous la forme d'une mosaïque d'images des participants. Cependant, lorsque les participants sont nombreux, seul l'image du participant actif ayant pris la parole est retransmise par le moyen central à tous les terminaux.

S'agissant des signaux audio, le moyen central soit somme tous les signaux audio reçus dans les terminaux afin de restituer la somme de ces signaux vers chaque terminal à l'exception du signal provenant de celui-ci, soit détecte l'activité vocale la plus élevée des terminaux afin de ne transmettre que le signal audio provenant de ce terminal vers les autres terminaux.

Dans ces systèmes de visioconférence connus, tous les terminaux participant à la visioconférence sont en communication audio. Le signal audio provenant de chaque terminal et retransmis vers les autres terminaux ou le signal audio ayant l'activité vocale la plus élevée retransmis vers les autres terminaux ne reflète pas des situations dans lesquelles des travailleurs dans une même entreprise, ou de manière générale des participants dans un même local, dialoguent. Par exemple, dans un groupe professionnel de quatre participants, deux participants quelconques peuvent souhaiter discuter sans que leur conversation soit écoutée par les deux autres personnes, ou bien un participant peut souhaiter diffuser un message vers un ou deux ou trois des autres participants, ou bien encore un participant souhaite intervenir dans la conversation confidentielle entre deux ou trois participants.

**L'objectif** de la présente invention est de recréer les situations relationnelles des participants d'un groupe professionnel lorsqu'au moins l'un d'eux a son terminal qui est déporté par rapport au reste du groupe. De manière plus générale, l'invention vise à rompre l'isolement des télé-travailleurs en recréant virtuellement autour de chacun d'eux le groupe professionnel auquel il appartient de la même manière que s'ils se trouvaient tous dans le même bureau, tant bien même que les participants sont tous déportés géographiquement à leurs domiciles. Chaque participant peut alors discuter avec un ou plusieurs autres participants de son choix, voire intervenir dans la discussion entre deux participants, comme il le ferait s'il travaillait dans le même bureau que les autres participants.

A cette fin, un système de visioconférence comprenant des terminaux reliés à travers un réseau de télécommunications à un moyen central de gestion de visioconférence qui collecte des données vidéo de participants à au moins une visioconférence transmises respectivement par les terminaux et diffuse les données vidéo transmises par chaque terminal vers les autres terminaux, est caractérisé en ce que chaque terminal en tant que terminal appelant comprend un moyen de sélection pour sélectionner au moins un terminal appelé avec lequel une communication audiovisuelle doit être établie afin que le terminal appelant transmette un identificateur de terminal appelé et des données audio et vidéo d'appelant au moyen central, le moyen central comprend un moyen audio-vidéo pour retransmettre les données audio et vidéo d'appelant avec les identificateurs des terminaux appelant et appelé vers le terminal appelé et retransmettre seulement les données vidéo d'appelant avec l'identificateur du terminal appelant vers les terminaux autres que les terminaux appelant et appelé, et chaque terminal en tant que terminal appelé comprend un moyen de commande pour commander une reproduction des données audio d'appelant retransmises par le moyen central en correspondance avec l'affichage d'images représentatives des données vidéo d'appelant retransmises par le moyen central, en réponse aux identificateurs des terminaux appelant et appelé transmis par le moyen central.

Contrairement aux systèmes de visioconférence connus, le système de visioconférence selon l'invention n'échange pas systématiquement les données audio entre les terminaux, ou ne diffuse pas les données audio du participant ayant pris la parole vers les autres terminaux. Le moyen central n'aiguille que les données audio entre les terminaux ayant souhaité établir une audioconférence à l'intérieur de la visioconférence. En revanche, comme dans certains systèmes de visioconférence connus, le moyen central diffuse en permanence l'image du participant de chaque terminal vers les autres terminaux.

Par exemple, si Pierre, Paul, Jacques et Mathieu sont des participants de la visioconférence, chacun d'entre eux observe l'image des trois autres sur l'écran de son terminal, et par exemple Pierre et Paul dialoguent entre eux sans que Jacques et Mathieu puissent écouter leur conversation ; ou bien Mathieu décide de diffuser un message vocal ou de discuter avec les trois autres participants Pierre, Paul et Jacques, par exemple pour un vote, sans que Pierre, Paul et Jacques puissent discuter entre eux ; ou bien encore selon un autre exemple, Jacques peut intervenir dans la discussion avec Pierre et Paul si ces derniers acceptent l'intervention de Jacques. Les diverses relations de travail entre ces quatre participants sont ainsi reproduites dans le système de visioconférence selon l'invention, malgré l'éloignement entre les divers participants.

Selon une autre caractéristique du système de visioconférence selon l'invention, chaque terminal en tant que terminal appelé comprend un moyen pour transmettre une confirmation d'appel avec un identificateur du terminal appelé et des données audio et vidéo d'appelé au moyen central, et le moyen central comprend un moyen de mémoire pour faire correspondre l'identificateur du terminal appelé à l'identificateur du terminal appelant et inversement afin d'établir une communication bidirectionnelle audiovisuelle entre lesdits terminaux appelant et appelé.

Afin que chaque participant devant un terminal puisse écouter sélectivement les voix des autres participants avec lesquels il est en conversation, chaque terminal comprend un moyen pour mélanger des données audio transmises sélectivement par d'autres terminaux en communication audiovisuelle avec ledit chaque terminal.

Selon une autre caractéristique avantageuse de l'invention, le moyen de sélection de chaque terminal appelé ou appelant marque sur un écran du terminal l'image et/ou l'identificateur de chaque participant dont le terminal, qu'il soit appelant ou appelé, est en communication audiovisuelle avec ledit chaque terminal. Cet affichage ou ce marquage attire l'attention du participant devant le terminal vers les images des autres participants avec lesquels il est en conversation comme s'il les avaient en face de lui, dans un local commun.

L'invention concerne également un serveur central dans un système de visioconférence selon l'invention. Plus précisément, le serveur central est caractérisé en ce qu'il comprend un moyen central conforme à l'invention, comprenant un moyen audio-vidéo pour retransmettre des données audio-vidéo d'un terminal appelant dans lequel a été sélectionné au moins un terminal appelé parmi lesdits terminaux avec lequel une communication audiovisuelle doit être établie, avec des identificateurs des terminaux appelant et appelé vers le terminal appelé, et transmettre seulement les données vidéo d'appelant avec l'identificateur du terminal appelant vers les terminaux autres que les terminaux appelant et appelé en réponse aux identificateurs des terminaux appelant et appelé transmis par le terminal appelant.

L'invention concerne encore un terminal de visiophonie pour un système de visioconférence conforme à l'invention. Plus particulièrement, le terminal est caractérisé en ce qu'il comprend un moyen de sélection pour sélectionner parmi lesdits terminaux au moins un terminal appelé avec lequel une communication audiovisuelle doit être établie afin que ledit terminal transmette un identificateur du terminal appelé et des données audio et vidéo d'appelant au moyen central, et un moyen de commande pour commander une reproduction de données audio d'un terminal appelant retransmises par le moyen central en correspondance avec l'affichage d'images représentatives de données vidéo d'appelant retransmises par le moyen central, en réponse aux identificateurs dudit terminal et du terminal appelant transmis par le moyen central.

D'autres caractéristiques et avantages de la présente invention apparaîtront plus clairement à la lecture de la description suivante de plusieurs réalisations préférées de l'invention en référence aux **dessins annexés** correspondants dans lesquels :
- la figure 1 est un bloc-diagramme schématique d'un système de visioconférence selon l'invention ;
- la figure 2 est un bloc-diagramme schématique d'un serveur central de visioconférence selon l'invention ;
- la figure 3 est un bloc-diagramme schématique d'un terminal de visiophonie selon l'invention ;
- la figure 4 est un algorithme d'établissement de visioconférence dans le système de visioconférence montré à la figure 1 ; et
- la figure 5 est un algorithme de déroulement d'audioconférence dans une visioconférence établie conformément à l'invention.

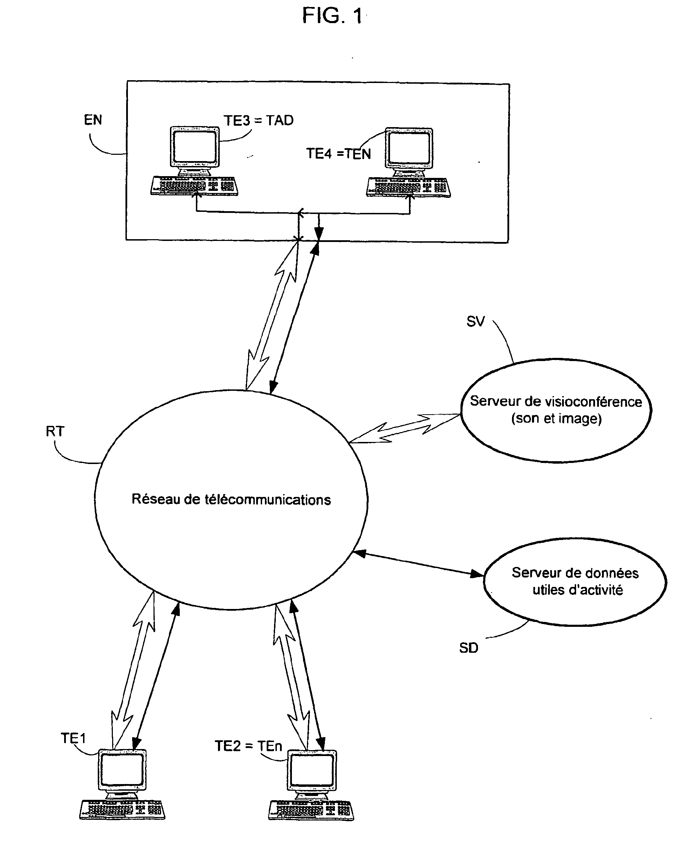

En référence à la figure 1, un **système de visioconférence** selon l'invention comprend essentiellement des terminaux de visiophonie TE1 à TEN, un serveur central de visioconférence SV et un serveur de données utiles d'activité SD qui sont reliés à travers un réseau de télécommunications RT. Afin de ne pas surcharger la figure 1, seulement quatre terminaux de visiophonie TE1, TE2 = TEn, TE3 = TAD et TE4 = TEN sont illustrés. Par exemple, les terminaux TE1 et TE2 sont installés aux domiciles de télé-travailleurs, et les terminaux TE3 et TE4 sont installés dans une entreprise EN dont dépend les deux télé-travailleurs.

Le serveur central de visioconférence SV fait office d'un pont de visioconférence pour collecter et distribuer des signaux vidéo et audio entre les terminaux TE1 à TEN et pour établir sélectivement des audioconférences entre quelques uns de ces terminaux. Le serveur de données SD gère des données utiles aux activités entre les participants à la visioconférence devant les terminaux TE1 à TEN.

Les serveurs SD et SV sont en général reliés aux terminaux à travers le réseau de télécommunications RT. Toutefois, les serveurs SD et SV peuvent être inclus dans l'entreprise EN et être reliés aux terminaux TE3 et TE4 à travers un réseau intranet et aux terminaux TE1 et TE2 à travers le réseau de télécommunications RT. Par exemple, le réseau de télécommunications est un réseau numérique à intégration de services RNIS qui est relié aux terminaux par des lignes de télécommunications constituant des accès de base chacun à deux canaux de données B et aux serveurs SV et SD par des accès primaires chacun à trente canaux de données B. Selon une autre variante, le réseau de télécommunications RT contient un réseau de transmissions par paquets de type ATM (Asynchronous Transfer Mode) ou un réseau ATM/IP (Internet Protocol).

Selon encore une autre variante, les serveurs SV et SD sont confondus en un seul serveur central de visioconférence gérant à la fois des signaux vidéo, audio et des données d'activité.

Bien que la description suivante se réfère à une visioconférence créée entre les terminaux TE1 à TE4 = TEN illustrés à la figure 1, les serveur SV et SD peuvent gérer simultanément plusieurs visioconférences pour plusieurs groupes distincts de terminaux non représentés.

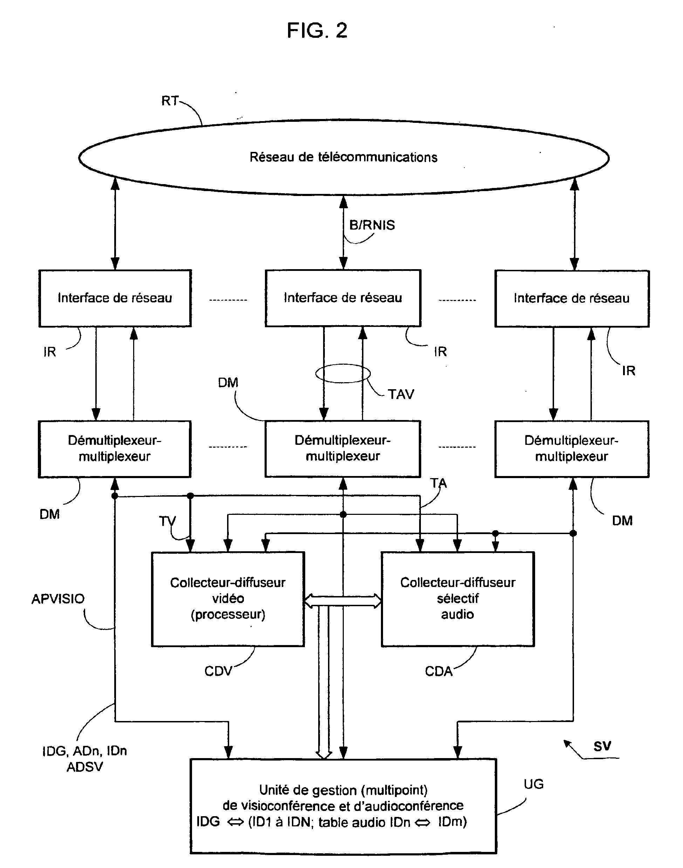

Selon une réalisation préférée, le serveur central de visioconférence SV montré à la figure 2 comprend plusieurs interfaces de réseau IR, plusieurs démultiplexeurs-multiplexeurs DM reliés respectivement aux interfaces IR, et un collecteur-diffuseur vidéo CDV et un collecteur-diffuseur sélectif audio CDA reliés respectivement par des voies bidirectionnelles vidéo et audio aux démultiplexeurs-multiplexeurs DM. Une unité de gestion UG est reliée aux circuits précités dans le serveur SV et gère chaque visioconférence et chaque audioconférence et particulièrement l'établissement des appels audio entre des terminaux d'une visioconférence ainsi que les données vidéo et audio échangées entre les terminaux.

Les interfaces de réseau IR sont par exemple reliées au réseau de télécommunications RT chacune à travers un accès de base ou un accès primaire RNIS. Les interfaces adaptent des messages échangés entre le serveur SV et les terminaux. Les messages contiennent principalement une adresse de source et une adresse de destinataire qui peuvent être l'adresse ASV du serveur SV, l'identificateur IDn d'un terminal TEn qui peut correspondre à un numéro téléphonique ou à une adresse URL (Uniform Resource Locator) associée éventuellement à un nom de participant, des données concernant l'état d'une communication relatif par exemple à une demande de connexion, un téléchargement, un appel, une confirmation d'appel ou une libération, et des données proprement dites vidéo TVn, ou audiovisuelles TAVn. Les données vidéo TVn correspondent à une trame vidéo numérisée et compressée, et les données TAVn correspondent à une trame avec les signaux composant vidéo et audio d'un signal audiovisuel animé.

Les démultiplexeurs-multiplexeurs DM démultiplexent les trames vidéo transmises par les terminaux afin que le collecteur-diffuseur vidéo CDV collecte des trames vidéo TV représentatives des images animées des participants à une visioconférence et les diffuse vers les terminaux à travers les démultiplexeurs-multiplexeurs DM. Ainsi les images animées de tous les participants d'une visioconférence sont collectées par le collecteur-diffuseur CDV et l'image de chaque participant est diffusée vers tous les terminaux de la visioconférence, à l'exception du terminal du participant. Comme on le verra dans la suite, la collecte et la diffusion des images du participant est effectuée en permanence après que la visioconférence soit établie.

Les démultiplexeurs-multiplexeurs DM transmettent également des trames audio TA extraites des trames audiovisuelles TAV au collecteur-diffuseur CDA. Cependant, conformément à l'invention, au cours d'une visioconférence, a priori quelques uns seulement des terminaux échangent des trames audio en fonction de communications audio établies entre certains des participants, formant ainsi une ou plusieurs audioconférences établies au cours de la visioconférence. Le collecteur-diffuseur sélectif audio CDA collecte toutes les trames audio TA produites par démultiplexage des trames audiovisuelles TAV et ne les diffuse que vers les terminaux indiqués par l'adresse du destinataire ou les adresses des destinataires contenues dans les messages incluant respectivement les trames audiovisuelles TAV.

L'unité de gestion UG traite les adresses et identificateurs dans les messages reçus de manière à aiguiller sélectivement les trames vidéo TV et audiovisuelles TAV vers les terminaux destinataires. L'unité de gestion UG sert également à la création d'une visioconférence en déterminant avec un administrateur AD un identificateur IDG d'un groupe de participants à une visioconférence, et des identificateurs de terminal de participant ID1 à IDN, et en téléchargeant une application de visioconférence APVISIO dans les terminaux participant à la visioconférence. En général, l'administrateur est un participant devant un terminal comme indiqué par le terminal TAD = TE3 dans la figure 1 qui est situé dans l'entreprise EN. Toutefois, l'administrateur peut être lié à l'opérateur du réseau de télécommunications RT et être situé devant le serveur SV lorsque celui-ci est à l'extérieur de l'entreprise EN.

L'unité de gestion UG est du type processeur multipoint, tandis que le collecteur-diffuseur vidéo CDV et le collecteur-diffuseur sélectif audio CDA sont des processeurs dédiés respectivement au traitement de signaux vidéo et de signaux audio.

Chaque terminal de visioconférence TEn, avec 1 ≤ n ≤ N, est constitué d'un ordinateur personnel PC pouvant fonctionner en multitâches particulièrement pour échanger des données d'activité avec des autres terminaux à travers le serveur de données SD, tout en participant à une visioconférence avec les autres terminaux TE1 à TEN pour afficher les N-1 images des autres participants.

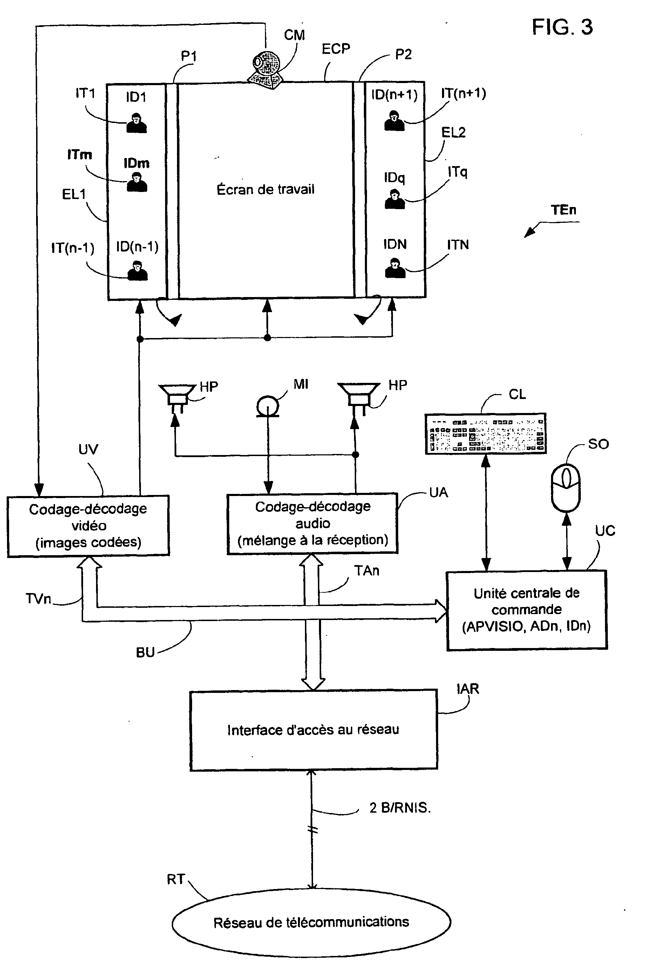

Comme montré à la figure 3, le terminal TEn comprend, d'un point de vue fonctionnel pour l'invention, une interface IAR d'accès au réseau de télécommunications RT, par exemple à travers un accès de base à deux canaux B, une unité de codage-décodage vidéo UV, une unité de codage-décodage audio UA et une unité centrale de commande UC qui sont reliés par un bus de données, d'adresses et de commandes BU. L'unité centrale de commande UC regroupe classiquement un processeur d'unité centrale d'ordinateur, des mémoires et un disque dur et est reliée à un clavier CL et, le cas échéant, à une souris SO.

Sous la commande de l'unité centrale UC, l'interface IAR répartie les données vidéo et audio dans les trames vidéo TV1 à TV(n-1) et TV(n+1) à TVN transmises par les autres terminaux TE1 à TE(n-1) et TE(n+1) à TEN de la visioconférence à travers le serveur SV vers l'unité vidéo UV afin d'afficher sur un écran du terminal les images des N-1 autres participants.

Selon une réalisation préférée montrée à la figure 3, l'écran du terminal TEn est composé d'un écran principal central ECP classique et de deux petits écrans plats EL1 et EL2 rapportés latéralement à l'écran central ECP et connectés au port de bus série universel USB du terminal. L'écran principal ECP sert d'écran de travail pour visualiser des données télé-informatiques d'activité échangées avec les autres terminaux à travers le serveur de données SD et également l'unité vidéo UV dans le terminal TEn. Chaque écran latéral EL1, EL2 peut visualiser jusqu'à environ la moitié des images de participant IT1 à ITN correspondant aux participants à une visioconférence devant les autres terminaux TE1 à TEN.

Afin de faciliter l'installation de chacun des écrans plats rectangulaires EL1, EL2 à côté de l'écran principal ECP d'un moniteur d'ordinateur classique, chaque écran latéral EL1, EL2 est monté à pivotement grâce à deux pattes d'articulation P1, P2 dotées d'adhésifs pour les fixer sur le dessus et le dessous d'un côté de l'écran principal ECP. Lorsque le terminal TEN n'est pas utilisé, les écrans EL1 et EL2 sont rabattus autour des paires de pattes P1 et P2 contre l'écran principal ECP.

De préférence, les écrans EL1 et EL2 sont tactiles de manière à sélectionner avec la pointe d'un stylo ou un doigt l'image IT1 à ITN ou l'identificateur ID1 à IDN du participant ou des participants avec lesquels le participant devant le terminal TEn désire converser et donc établir une communication audiovisuelle. La sélection d'une image ITm ou d'un identificateur IDm, avec m ≠ n, d'un participant quelconque peut être réalisée également par le clavier CL ou la souris SO, à travers un logiciel d'application de visioconférence APVISIO installé principalement dans l'unité de commande UC afin que chaque image affichée sur l'ensemble des écrans ECP, EL1 et EL2 puisse déborder jusque vers les écrans latéraux EL1 et EL2.

En variante, lorsque l'écran principal ECP est suffisamment grand, deux bandes verticales d'images de participants sont incrustées latéralement afin de disposer d'une surface d'image centrale pour l'affichage des données télé-informatiques d'activité.

Une caméra miniature CM du type numérique CCD (Charge Coupled Device) est reliée à l'unité de codage-décodage vidéo UV et est disposée sur l'écran principal ECP, par exemple sur une prolongation de la patte supérieur P2, pour prendre l'image animée ITn du participant devant le terminal TEn. Les trames TVn de l'image animée ITn sont transmises via l'unité UV et l'interface IAR au serveur de visioconférence SV afin qu'il les diffuse vers les autres terminaux TE1 à TE(n-1) et TE(n+1) à TEN de la visioconférence.

La voix du participant devant le terminal TEn est captée par un microphone MI ou bien par un ensemble de microphones constituant une antenne acoustique, pour être numérisée dans l'unité audio UA sous forme de trames "audio" TAn afin de les mélanger aux trames vidéo TVn transmises par l'unité UV dans l'interface IAR qui envoie des trames audiovisuelles TAVn au serveur SV. Comme on le verra dans la suite, chaque trame audiovisuelle TAVn transmise par le terminal TEn est accompagnée d'une ou plusieurs adresses de destinataire relatives à des participants de la visioconférence dont les images ont été sélectionnées sur les écrans latéraux EL1 et EL2 et avec lesquels le participant devant le terminal TEn souhaite converser. En outre, l'application APVISIO permet de sélectionner un icône sur l'écran ECP afin de déconnecter temporairement le micro MI de l'unité audio UA pour préserver certains échanges confidentiels au domicile du participant télé-travailleur.

Selon le sens de réception, l'unité audio UA reçoit et mélange des trames audio démultiplexées dans les trames reçues par l'interface IAR et transmises par les participants en conversation afin de reproduire un signal audio par un ou plusieurs haut-parleurs HP.

Selon d'autres variantes, le terminal TEn est un terminal portable relié au réseau de télécommunications RT à travers un réseau d'accès connu comme un réseau de radiotéléphonie cellulaire GSM ou UMTS, ou à un réseau de radiotéléphonie de proximité de type Bluetooth. Dans ces variantes, le terminal peut être doté d'une alimentation électrique supplémentaire pour les écrans latéraux EL1 et EL2 amovibles et rabattables d'une manière compacte contre l'écran principal ECP.

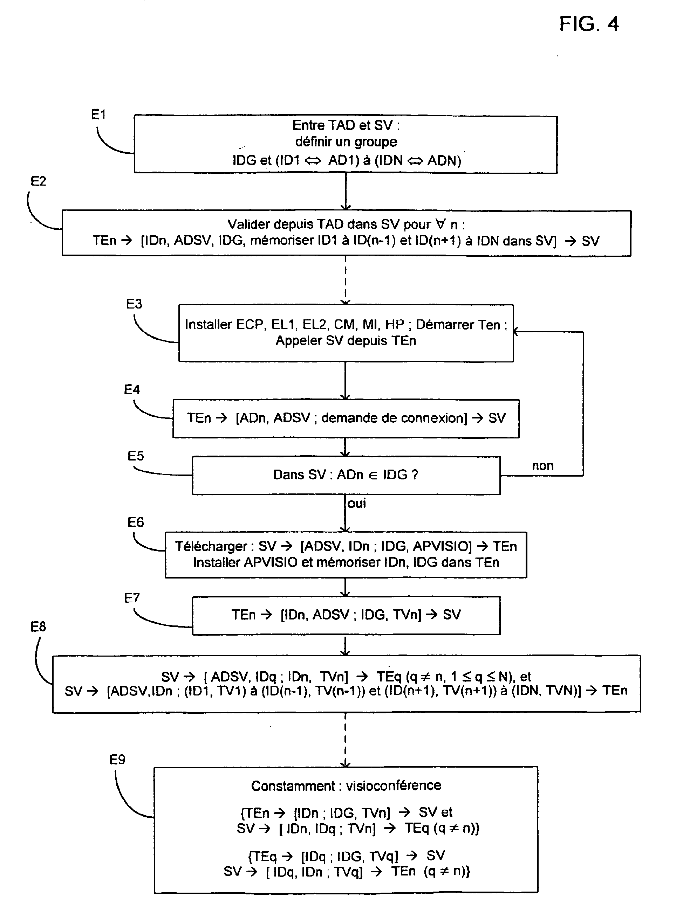

Pour définir les principaux paramètres d'une visioconférence initialisée par un administrateur depuis un terminal quelconque TAD, par exemple le terminal TE3 inclus dans l'entreprise EN à la figure 1, un dialogue par l'intermédiaire de formulaires HTML s'instaure entre le terminal TAD et le serveur de visioconférence SV à l'étape E1, comme montré à la figure 4. Le serveur SV alloue à la visioconférence à établir un identificateur de groupe de participant IDG qui permettra de distinguer le message transmis par les terminaux de la visioconférence par rapport aux messages transmis par les terminaux des autres visioconférences gérées par le serveur SV.

Puis le serveur SV demande au terminal TAD de lui indiquer au moins les adresses AD1 à ADN des terminaux TE1 à TEN regroupés dans la visioconférence à établir. Une adresse ADn d'un terminal TEn peut être un numéro de téléphone ou une adresse URL du terminal. Afin de faciliter la désignation des terminaux TE1 à TEN en association avec les images des participants IT1 à ITN, le nom et/ou le prénom est associé à l'adresse du terminal. Dans la suite de la description, on désigne par ID1 à IDN les identificateurs de terminaux TE1 à TEN de la visioconférence IDG à établir, chaque identificateur IDn comprenant au moins l'adresse ADn et le cas échéant par exemple le nom et/ou le prénom du participant.

Après avoir énoncé les identificateurs ID1 à IDN, l'administrateur valide à l'étape E2 la liste des identificateurs ID1 à IDN en l'insérant dans un message ayant pour adresse de source l'identificateur IDn et pour adresse de destination l'adresse ADSV du serveur SV. L'unité de gestion UG dans le serveur SV mémorise la liste des identificateurs de terminal ID1 à IDN en correspondance avec l'identificateur de visioconférence IDG afin de commander notamment la diffusion des trames vidéo de l'image de chaque participant vers les terminaux des autres participants de la visioconférence.

Les étapes suivantes E3 à E8 illustrent à la figure 4 l'introduction d'un terminal TEn dans la visioconférence désignée par l'identificateur IDG.

A l'étape E3, après avoir démarré le terminal TEn, et particulièrement après avoir installé les écrans ECP, EL1 et EL2, la caméra CM, le microphone MI et au moins un haut-parleur HP, le terminal TEn appelle le serveur SV en transmettant un message de demande de connexion contenant l'adresse ADn du terminal TEn en tant qu'adresse de source et l'adresse ADSV du serveur de visioconférence SV en tant qu'adresse de destinataire. Tant que le terminal n'appelle pas le serveur SV, celui-ci peut être utilisé pour exécuter des tâches locales. En réponse au message de demande de connexion transmis par le terminal TEn à l'étape E4, l'un des démultiplexeurs-multiplexeurs DM oriente l'adresse ADn vers l'unité de gestion UG dans le serveur SV. L'unité UG vérifie à l'étape E5 que l'adresse ADn appartient à une liste d'identificateurs associés à l'identificateur IDG d'une visioconférence établie. Si l'adresse ADn n'est contenue dans aucune liste d'identificateurs mémorisée dans l'unité UG, le serveur SV refuse l'introduction du terminal TEn dans une visioconférence établie.

En revanche, si l'adresse ADn est reconnue dans la liste des identificateurs ID1 à IDN relative à la visioconférence établie IDG, l'unité de gestion UG télécharge l'application de visioconférence APVISIO dans le terminal TEn à l'étape E6 afin que cette application soit installée principalement dans l'unité centrale UC du terminal TEn. L'identificateur IDn est mémorisé dans l'unité centrale UC afin de l'utiliser en tant qu'adresse de source pour des messages à transmettre au serveur SV et en tant qu'adresse de destinataire pour détecter des messages transmis par le serveur SV à destination du terminal TEn.

Automatiquement, après l'installation de l'application APVISIO dans le terminal TEn, celui-ci transmet en permanence des messages contenant chacun des données constituées par l'identificateur IDG, l'identificateur IDn et l'adresse ADSV du serveur SV en tant qu'adresses de source et de destination, et une trame vidéo TVn représentative de l'image animée du participant devant la caméra CM du terminal TEn, à l'étape E7. En réponse à la première trame vidéo TVn transmise par le terminal TEn, l'unité de gestion UG dans le serveur SV commande d'une part la diffusion de la trame TVn accompagnée de l'identificateur IDn du terminal TEn par le collecteur-diffuseur vidéo CDV vers tous les terminaux TEq déjà introduits dans la visioconférence IDG, avec q ≠ n et 1 ≤ q ≤ N, comme indiqué à l'étape E8. D'autre part, le serveur SV renvoie les trames vidéo TV1 à TV(n-1) et TV(n+1) à TVN accompagnées respectivement des identificateurs ID1 à ID(n-1) et ID(n+1) à IDN et provenant des autres terminaux de la visioconférence vers le terminal TEn. L'unité de codage-décodage vidéo UV affiche alors les images IT1 à IT(n-1) et IT(n+1) à ITN, à l'exception de l'image ITn, des autres participants à la visioconférence IDG.

Comme indiqué plus généralement à l'étape E9, en faisant maintenant abstraction de l'adresse ADSV du serveur SV en tant qu'adresse de source ou de destination dans les messages, après introduction de tous les terminaux TE1 à TEN dans la visioconférence désignée par l'identificateur IDG, chaque terminal TEn, TEq transmet constamment des trames vidéo TVn, TVq avec l'identificateur de visioconférence IDG, mais sans les associer à des identificateurs de terminaux destinataires, vers le serveur central de visioconférence SV dont le collecteur-diffuseur vidéo CDV les diffuse vers les autres terminaux de la visioconférence. A ce stade, on remarquera, comparativement aux systèmes de visioconférence connus, qu'aucun signal audio n'est échangé entre les terminaux et particulièrement n'est transmis par le terminal TEn tant que le participant n'a pas sélectionné l'image ITm d'un autre participant à la visioconférence sur les écrans EL1 et EL2, avec m ≠ n et 1 ≤ m ≤ N.

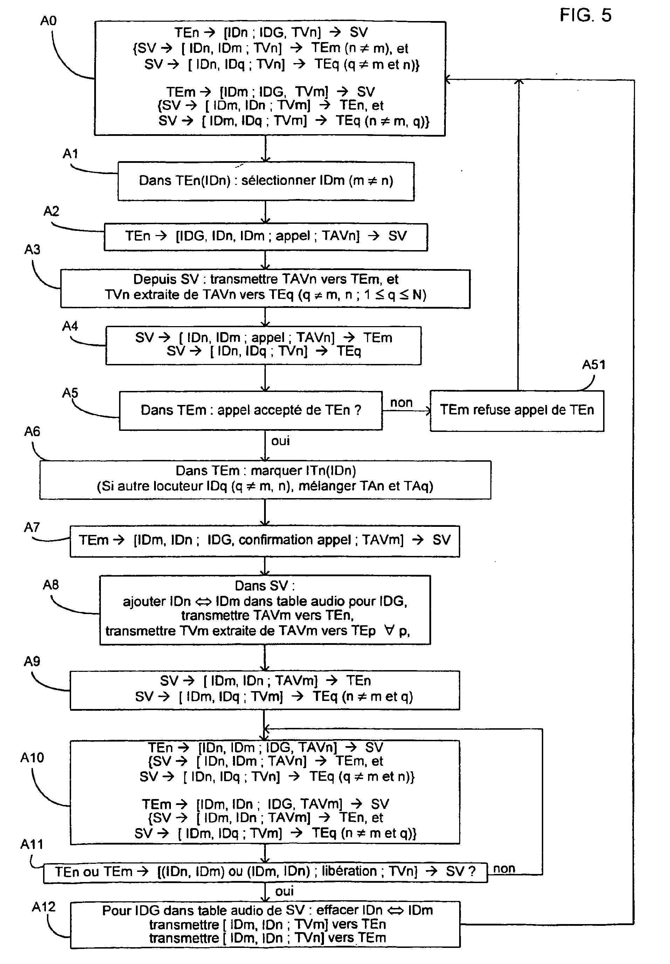

La figure 5 montre des étapes A0 à A12 du déroulement d'une audioconférence élémentaire établie au sein de la visioconférence IDG entre les terminaux TE1 à TEN. Cette audioconférence est supposée être initiée depuis le terminal TEn en tant que terminal appelant pour appeler un autre terminal TEm comme terminal appelé, lequel peut être déjà en audioconférence avec un autre terminal TEq. Ainsi, initialement comme indiqué à l'étape A0, tous les terminaux TEn, TEm, TEq transmettent des trames vidéo TVn, TVm, TVq vers les autres terminaux de la visioconférence à travers le serveur SV afin que chaque participant puisse observer l'image de chaque autre participant sur les écrans EL1 et EL2 de son terminal.

Lorsque l'appelant devant le terminal TEn souhaite établir une conversation avec l'appelé devant le terminal TEm, il sélectionne l'image d'appelé ITm, simulant ainsi un décrochage dans le terminal d'appelant TEn, dans les écrans EL1 et EL2 à l'étape A1. La sélection de l'image d'appelé ITm par le clavier CL, ou la souris SO, ou directement si l'écran EL1, EL2 est tactile, est confirmée par l'unité centrale UC par exemple par un cadrage de l'image ITm ou par un marquage de l'identificateur d'appelé IDm par une couleur appropriée.

Puis le terminal TEn aux étapes suivantes A2, A3 et A4, déclenche un appel du terminal TEm en transmettant des données d'appel dans un message contenant également une trame audiovisuelle TAVn, laquelle résulte d'un mélange de signaux vidéo et éventuellement audio transmis par les unités UV et UA dans le terminal TEn. Le serveur SV extrait de la trame reçue TAVn une trame vidéo TVn qui est diffusée par le collecteur-diffuseur vidéo CDV vers les autres terminaux, à l'exception du terminal TEm. Seulement pour le terminal appelé TEm sélectionné dans le terminal TEn, le serveur SV transmet la trame audiovisuelle reçue TAVn, comme indiqué aux étape A3 et A4. Le message transmis par le serveur SV au terminal appelé TEm contient également les données d'appel transmises par le terminal appelant TEn, ainsi que les identificateurs IDn et IDm spécifiant la source et le destinataire du message.

A l'étape A5, l'unité centrale de commande UC dans le terminal appelé TEm examine le message reçu afin de signaler à l'appelé devant le terminal TEm que l'appelant devant le terminal TEn souhaite lui parler. Ce signalement est par exemple traduit à l'étape A6 par un cadre en traits épais de l'image d'appelant ITn sur l'écran EL1, EL2 du terminal TEm, ou bien par un marquage de l'identificateur d'appelant IDn sur celui-ci, ou bien encore par un message synthétisé reproduit par haut-parleurs HP. Si l'appelé refuse l'appel du terminal TEn, en sélectionnant l'image d'appelant ITn au clavier CL, ou à la souris SO, ou par contact sur l'écran EL1, EL2, le terminal TEm efface le marquage de l'image ITn ou de l'identificateur IDn. En variante, le terminal d'appelé TEm retransmet à l'étape A51 un message de refus contenant des données de refus d'appel avec une trame vidéo TVm au serveur SV qui confirme également ce refus au terminal d'appelant TEn en lui transmettant les données de refus ce qui effacera automatiquement le marquage d'image ITm ou d'identificateur IDm à l'écran du terminal TEn. Dans le cas contraire, l'unité centrale UC du terminal d'appelé TEm accepte les données audio de la trame TAVn et des prochaines trames TAVn afin de les reproduire à travers les haut-parleurs HP.

Le cas échéant, comme également indiqué à l'étape A6, l'unité de codage-décodage audio UA dans le terminal appelé mélange la trame TAn extraite de la trame audiovisuelle reçue TAVn avec une trame audio TAq d'au moins un autre participant avec lequel le participant appelé du terminal TEm était déjà en conversation avant l'étape A6. Dans ce cas, le participant devant le terminal TEm parle à la fois aux participants devant les terminaux TEn et TEq sans que ces derniers puissent se parler directement. Ce cas simule une relation réelle où deux employés de l'entreprise sont en cours de conversation alors qu'un troisième intervient auprès de l'un des deux premiers.

A l'étape suivante A7, l'unité de commande UC dans le terminal appelé TEm transmet au serveur SV un message contenant des données de confirmation d'appel et contenant une trame audiovisuelle TAVm, c'est-à-dire représentatives de l'image et de la voix de l'appelé devant la caméra CM et le microphone MI du terminal TEm. En réponse au message de confirmation d'appel, le serveur SV à l'étape A8 ajoute la correspondance des identificateurs IDn et IDm dans une table d'audioconférence pour la visioconférence IDG. Grâce à cette correspondance, les trames audiovisuelles TAVn et TAVm sont échangées entre les terminaux appelant et appelé TEn et TEm seulement. Ainsi, comme indiqué à l'étape A9, le serveur SV transmet la trame audiovisuelle TAVm seulement dans un message destiné au terminal appelant TEn qui dialogue avec le terminal appelé TEm, et ne transmet que des trames vidéo TVm à tous les terminaux TEq autres que les terminaux TEn et TEm.

Comme indiqué à l'étape A10, le serveur SV continue à collecter les trames vidéo de chaque terminal afin de les diffuser vers les autres terminaux et ne transmet que des trames audiovisuelles TAVm et TAVn respectivement aux terminaux TEn et TEm en audioconférence. Plus généralement, si le participant devant le terminal TEn a sélectionné plusieurs images IT1 à ITN de participants avec lesquels il souhaite établir une audioconférence, le serveur SV diffuse des trames audiovisuelles entre les terminaux participant à cette audioconférence à l'intérieur de la visioconférence.

L'audioconférence entre au moins les terminaux TEn et TEm peut être arrêtée à l'étape A11 par une opération de libération d'appel, simulant un raccrochage, déclenchée depuis l'un ou l'autre des terminaux TEn et TEm. Cette libération est initiée en désactivant la sélection de l'image ITm, ITn ou de l'identificateur IDm, IDn dans le terminal TEn, TEm par le participant, l'unité centrale de commande UC fermant la voie audio d'émission depuis le microphone MI dans l'unité audio UA. L'unité UC commande l'établissement d'un message de libération d'appel contenant une trame TVn seulement du type vidéo afin que le serveur SV efface la correspondance entre les identificateurs IDn et IDm dans la table audio pour la visioconférence IDG à l'étape A12. Le serveur SV transmet alors comme à l'étape initiale A0 seulement des trames vidéo TVm, TVn vers le terminal respectif TEn, TEm.

## Revendications

1. Système de visioconférence comprenant des terminaux (TE1 à TEN) reliés à travers un réseau de télécommunications (RT) à un moyen central de gestion de visioconférence (SV) qui collecte des données vidéo de participants à au moins une visioconférence transmises respectivement par les terminaux et diffuse les données vidéo transmises par chaque terminal vers les autres terminaux, **caractérisé en ce que** chaque terminal (TEn) en tant que terminal appelant comprend un moyen de sélection (UC) pour sélectionner au moins un terminal appelé (TEm) avec lequel une communication audiovisuelle doit être établie afin que le terminal appelant transmette (A3) un identificateur de terminal appelé (IDm) et des données audio et vidéo d'appelant (TAVn) au moyen central, le moyen central (SV) comprend un moyen audio-vidéo (CDV, CDA) pour retransmettre (A4) les données audio et vidéo d'appelant (TAVn) avec les identificateurs (IDn, IDm) des terminaux appelant et appelé vers le terminal appelé, et retransmettre seulement les données vidéo d'appelant (TVn) avec l'identificateur (IDn) du terminal appelant vers les terminaux (TEq) autres que les terminaux appelant et appelé, et chaque terminal en tant que terminal appelé (TEm) comprend un moyen de commande (UC) pour commander une reproduction des données audio d'appelant (TAn) retransmises par le moyen central en correspondance avec l'affichage d'images représentatives des données vidéo d'appelant (TVn) retransmises par le moyen central, en réponse aux identificateurs (IDn, IDm) des terminaux appelant et appelé transmis par le moyen central.

2. Système conforme à la revendication 1, **caractérisé en ce que** chaque terminal en tant que terminal appelé (TEm) comprend un moyen (UC) pour transmettre (A7) une confirmation d'appel avec un identificateur (IDm) du terminal appelé et des données audio et vidéo d'appelé (TAVm) au moyen central (SV), et le moyen central (SV) comprend un moyen de mémoire (UG) pour faire correspondre (A8) l'identificateur (IDm) du terminal appelé à l'identificateur (IDn) du terminal appelant et inversement afin d'établir une communication bidirectionnelle audiovisuelle entre lesdits terminaux appelant et appelé.

3. Système conforme à la revendication 1 ou 2, dans lequel chaque terminal (TEn) comprend un moyen (UA, UC) pour mélanger des données audio transmises sélectivement par d'autres terminaux en communication audiovisuelle avec ledit chaque terminal.

4. Système conforme à l'une quelconque des revendications 1 à 3, dans lequel le moyen de sélection (UC) de chaque terminal (TEn) marque sur un écran (EL1, EL2) du terminal l'image (ITm) et/ou l'identificateur (IDm) de chaque participant dont le terminal (TEm) est en communication audiovisuelle avec ledit chaque terminal.

5. Système conforme à la revendication 4, dans lequel l'image (ITm) ou l'identificateur (IDm) d'un participant avec le terminal (TEm) duquel une communication audiovisuelle doit être établie depuis ledit chaque terminal (TEn), est affiché sélectivement par contact tactile sur l'écran (EL1, EL2) dudit chaque terminal (TEn).

6. Système conforme à l'une quelconque des revendications 1 à 5, dans lequel chaque terminal comprend un écran principal (ECP) pour afficher des données télé-informatiques d'activité, et au moins un écran latéral (EL1, EL2) pour visualiser des images (IT1 à ITN) des participants à la visioconférence.

7. Système conforme à l'une quelconque des revendications 1 à 6, dans lequel l'écran latéral (EL1, EL2) est monté à pivotement sur un côté de l'écran central (ECP).

8. Système conforme à l'une quelconque des revendications 1 à 7, dans lequel chaque terminal (TEn) transmet un identificateur de visioconférence (IDG) et ne transmet pas d'identificateur de terminal destinataire lorsqu'il ne transmet que des données vidéo (TVn) au moyen central (SV).

9. Système conforme à l'une quelconque des revendications 1 à 8, **caractérisé en ce que** le moyen central (SV) télécharge (E6) une application de visioconférence prédéterminée (APVISIO) dans chaque terminal (TEn) en réponse à un message de demande de connexion (E4) dudit chaque terminal contenant une adresse (ADn) de celui-ci et une vérification (E5) de l'association de cette adresse à un identificateur (IDG) de la visioconférence dans le moyen central.

10. Serveur central de visioconférence (SV) destiné à être relié à des terminaux (TE1 à TEN) à travers un réseau de télécommunications (RT) dans un système de visioconférence où des données vidéo de participants à au moins une visioconférence transmises respectivement par les terminaux sont collectées par le serveur central et les données vidéo collectées sont diffusées vers les terminaux par le serveur central, **caractérisé en ce qu'**il comprend un moyen audio-vidéo (CDA, CDV) pour retransmettre des données audio et vidéo (TAVn) d'un terminal appelant (TEn) dans lequel a été sélectionné au moins un terminal appelé (TEm) avec lequel une communication audiovisuelle doit être établie, avec des identificateurs (IDn, IDm) des terminaux appelant et appelé vers le terminal appelé, et retransmettre seulement les données vidéo d'appelant (TVn) avec l'identificateur (IDn) du terminal appelant vers les terminaux autres que les terminaux appelant et appelé en réponse aux identificateurs (IDn, IDm) des terminaux appelant et appelé transmis par le terminal appelant.

## Patentansprüche

1. Videokonferenzsystem, Endeinrichtungen (TE1 bis TEN) umfassend, die über ein Fernmeldenetz (RT) mit einem zentralen Mittel zur Verwaltung von Videokonferenzen (SV) verbunden sind, das Videodaten von Teilnehmern mindestens einer Videokonferenz sammelt, die jeweils von den Endeinrichtungen übertragen werden, und die von jeder Endeinrichtung übertragenen Videodaten an die anderen Endeinrichtungen überträgt, **dadurch gekennzeichnet, dass** jede Endeinrichtung (TEn) als rufende Endeinrichtung ein Auswahlmittel (UC) umfasst, um mindestens eine gerufene Endeinrichtung (TEm) auszuwählen, mit der eine audiovisuelle Verbindung hergestellt werden muss, damit die rufende Endeinrichtung eine Kennung der gerufenen Endeinrichtung (IDm) und Audio- und Videodaten des Anrufers (TAVn) an das zentrale Mittel überträgt (A3), das zentrale Mittel (SV) ein Audio-Video-Mittel (CDV, CDA) umfasst, um die Audio- und Videodaten des Anrufers (TAVn) mit den Kennungen (IDn, IDm) der rufenden und der gerufenen Endeinrichtung zur gerufenen Endeinrichtung zu übertragen und nur die Videodaten des Anrufers (TVn) mit der Kennung (IDn) der rufenden Endeinrichtung an die anderen Endeinrichtungen (TEq), als die rufende und gerufene Endeinrichtung, weiterzuübertragen, und jede Endeinrichtung als gerufene Endeinrichtung (TEm) ein Steuermittel (UC) umfasst, um eine Reproduktion der Audiodaten des Anrufers (TAn), die vom zentralen Mittel weiterübertragen wurden, entsprechend der Anzeige von Bildern, die den Videodaten des Anrufers (TVn) entsprechen, die vom zentralen Mittel weiterübertragen wurden, in Reaktion auf die Kennungen (IDn, IDm) der rufenden und der gerufenen Endeinrichtung, die vom zentralen Mittel weiterübertragen wurden, zu veranlassen.

2. System nach Patentanspruch 1, **dadurch gekennzeichnet, dass** jede Endeinrichtung als gerufene Endeinrichtung (TEm) ein Mittel (UC) zur Übertragung (A7) einer Anrufbestätigung mit einer Kennung (IDm) der gerufenen Endeinrichtung und Audio- und Videodaten des Angerufenen (TAVm) an das zentrale Mittel (SV) umfasst, und das zentrale Mittel (SV) ein Speichermittel (UG) enthält, um die Kennung (IDm) der gerufenen Endeinrichtung mit der Kennung (IDn) der rufenden Endeinrichtung und umgekehrt in Bezug zu setzen, um eine bidirektionelle audiovisuelle Verbindung zwischen den genannten Endeinrichtungen, der rufenden und der gerufenen, herzustellen.

3. System nach Patentanspruch 1 oder 2, in dem jede Endeinrichtung (TEn) ein Mittel (UA, UC) umfasst, um Audiodaten, die selektiv von anderen Endeinrichtungen übertragen wurden, die mit der genannten jeden Endeinrichtung in audiovisueller Verbindung stehen, zu mischen.

4. System nach irgendeinem der Patentansprüche 1 bis 3, in dem das Auswahlmittel (UC) jeder Endeinrichtung (TEn) auf einem Bildschirm (EL1, EL2) der Endeinrichtung das Bild (ITm) und/oder die Kennung (IDm) jedes Teilnehmers markiert, dessen Endeinrichtung (TEm) mit der genannten jeden Endeinrichtung in audiovisueller Verbindung steht.

5. System nach Patentanspruch 4, in dem das Bild (ITm) oder die Kennung (IDm) eines Teilnehmers, mit dessen Teilnehmerendeinrichtung (TEm) eine audiovisuelle Verbindung von der genannten jeden Endeinrichtung (TEn) aus hergestellt werden muss, selektiv durch Berührung auf dem Bildschirm (EL1, EL2) der genannten jeden Endeinrichtung (TEn) angezeigt wird.

6. System nach irgendeinem der Patentansprüche 1 bis 5, in dem jede Endeinrichtung einen Hauptbildschirm (ECP) zur Anzeige von Teleinformatik-Betriebsdaten umfasst und mindestens einen seitlichen Bildschirm (EL1, EL2) zur Darstellung von Bildern (IT1 bis ITN) der Teilnehmer der Videokonferenz.

7. System nach irgendeinem der Patentansprüche 1 bis 6, in dem der seitliche Bildschirm (EL1, EL2) schwenkbar an einer Seite des zentralen Bildschirms (ECP) montiert ist.

8. System nach irgendeinem der Patentansprüche 1 bis 7, in dem jede Endeinrichtung (TEn) eine Videokonferenzkennung (IDG) überträgt und keine Bestimmungs-Endeinrichtungskennung, wenn sie nur Videodaten (TVn) an das zentrale Mittel (SV) überträgt.

9. System nach irgendeinem der Patentansprüche 1 bis 8, **dadurch gekennzeichnet, dass** das zentrale Mittel (SV) in Reaktion auf eine Verbindungsanforderungsmeldung (E4) jeder Endeinrichtung (TEn), die eine Adresse (ADn) derselben enthält, und eine Prüfung (E5) der Zugehörigkeit dieser Adresse zu einer Videokonferenzkennung (IDG) im zentralen Mittel ein vorbestimmtes Videokonferenzprogramm (APVISIO) in die genannte jede Endeinrichtung fernlädt (E6).

10. Zentraler Videokonferenzserver (SV), dazu bestimmt, über ein Fernmeldenetz (RT) mit Endeinrichtungen (TE1 bis TEN) verbunden zu werden, in einem Videokonferenzsystem, in dem Videodaten von Teilnehmern mindestens einer Videokonferenz, die jeweils von den Endeinrichtungen übertragen werden, vom zentralen Server gesammelt werden und die gesammelten Videodaten vom zentralen Server an die Endeinrichtungen übertragen werden, **dadurch gekennzeichnet, dass** er ein Audio-Video-Mittel (CDA, CDV) enthält, um Audio- und Videodaten (TAVn) von einer rufenden Endeinrichtung (TEn), in der mindestens eine gerufene Endeinrichtung (TEm) ausgewählt wurde, mit der eine audiovisuelle Verbindung hergestellt werden muss, mit Kennungen (IDn, IDm) der rufenden und der gerufenen Endeinrichtung zur gerufenen Endeinrichtung weiterzuübertragen, und in Reaktion auf die Kennungen (IDn, IDm) der rufenden und der gerufenen Endeinrichtung, die die rufende Endeinrichtung übertragen hat, nur die Videodaten des Anrufers (TVn) mit der Kennung (IDn) der rufenden Endeinrichtung an die anderen Endeinrichtungen, als die rufende und die gerufene, weiterzuübertragen.

## Claims

1. A videoconference system comprising terminals (TE1 to TEN) connected via a telecommunications network (RT) to central videoconference management means (SV) that collects video data from participants in at least one videoconference respectively transmitted by the terminals and broadcasts video data transmitted by each terminal to the other terminals, **characterized in that** each terminal (TEn) as a calling terminal comprises selection means (UC) for selecting at least one called terminal (TEm) with which an audiovisual communication is to be set up in order for the calling terminal to transmit (A3) a called terminal identifier (IDm) and calling party audio and video data (TAVn) to the central means (SV), the central means comprises audio-video means (CDV, CDA) for transmitting (A4) the calling party audio and video data (TAVn) with the identifiers (IDn, IDm) of the calling and called terminals to the called terminal and for transmitting only the calling party video data (TVn) with the identifier (IDn) of the calling terminal to the terminals (TEq) other than the calling and called terminals, and each terminal (TEm) as a called terminal comprises control means (UC) for controlling reproduction of the calling party audio data (TAn) forwarded by the central means in matching relationship with the display of pictures representative of the calling party video data (TVn) transmitted by the central means in response to the identifiers (IDn, IDm) of the calling and called terminals transmitted by the central means.

2. A system according to claim 1, **characterized in that** each called terminal (TEm) as a called terminal comprises means (UC) for transmitting (A7) a call confirmation with an identifier (IDm) of the called terminal and the called party audio and video data (TAVm) to the central means (SV), and the central means (SV) comprises memory means (UG) for establishing (A8) a matching relationship between the identifier (IDm) of the called terminal and the identifier (IDn) of the calling terminal and vice-versa in order to set up bidirectional audiovisual communication between said calling and called terminals.

3. A system according to claim 1 or 2, wherein each terminal (TEn) comprises means (UA, UC) for mixing audio data transmitted selectively by other terminals in audiovisual communication with said each terminal.

4. A System according to any one of claims 1 to 3, wherein the selection means (UC) of each terminal (TEn) marks on a screen (EL1, EL2) of the terminal the picture (ITm) and/or the identifier (IDm) of each participant whose terminal (TEm) is in audiovisual communication with said each terminal.

5. A system according to claim 4, wherein the picture (ITm) or the identifier (IDm) of a participant with whose terminal (TEm) audiovisual communication is to be set up from said each terminal (TEn) is displayed selectively by touching the screen (EL1, EL2) of said each terminal (TEn).

6. A system according to any one of claims 1 to 5, wherein each terminal comprises a main screen (ECP) for displaying activity data and at least one lateral screen (EL1, EL2) for viewing pictures (IT1 to ITN) of the participants in the videoconference.

7. A system according to any one of claims 1 to 6, wherein the lateral screen (EL1, EL2) is pivotable mounted on one side of the central screen (ECP).

8. A system according to any one of claims 1 to 7, wherein each terminal (TEn) transmits a videoconference identifier (IDG) and does not transmit a destination terminal identifier if it transmits only video data (TVn) to the central means (SV).

9. A system according to any one of claims 1 to 8, **characterized in that** the central means (SV) downloads (E6) a predetermined videoconference application (APVISIO) into each terminal (TEn) in response to a connection request message (E4) from each terminal containing an address (ADn) of the latter and a verification (E5) of the association of that address with an identifier (IDG) of the videoconference in the central means.

10. A central videoconference server (SV) used to be connected to terminals (TE1 to TEN) via a telecommunications network (RT) in a videoconference system in which video data of participants in at least one videoconference respectively transmitted by the terminals are collected by the central server and the collected video data is broadcast to the terminals by the central server, **characterized in that** it comprises audio-video means (CDA, CDV) for transmitting the audio and video data (TAVn) from a calling terminal (TEn) which has selected at least one called terminal (TEm) with which audiovisual communication is to be set up, with identifiers (IDn, IDm) of the calling and called terminals to the called terminal, and transmitting only the calling party video data (TVn) with the identifier (IDn) of the calling terminal to terminals other than the called and calling terminals in response to the identifiers (IDn, IDm) of the calling and called terminals transmitted by the calling terminal.
